# EUROPEAN PATENT SPECIFICATION

(11) **EP 2 217 434 B1**
(45) Date of publication and mention of the grant of the patent: **18.04.2012**
(21) Application number: 08854000.0
(22) Date of filing: 26.11.2008
(51) Int. Cl.: B29D 30/32, B29D 30/24

(54) **Method of building tyres and drum therefor.**
Verfahren zur Reifenherstellung und Trommel dafür.
Procédé de fabrication de pneumatiques et tambour pour sa mise en oeuvre.

(30) Priority: 26.11.2007 NL 2001031; 26.11.2007 US 4291 P
(43) Date of publication of application: 18.08.2010
(73) Proprietor: VMI Holland B.V., 8161 RK Epe (NL)
(72) Inventor: GROLLEMAN, Henk-Jan, NL-6961 VC Eerbeek (NL); VAN TIENEN, Luuk, NL-7396 AJ Terwolde (NL); DE VRIES, Jakob Pieter, NL-8017 DX Zwolle (NL)
(74) Representative: Peters, Sebastian Martinus
(86) International application number: PCT/NL2008/050751
(87) International publication number: WO 2009/070019

(56) References cited:
- EP-A- 0 808 707
- EP-A- 1 800 846
- FR-A- 2 093 180
- US-A- 3 887 423
- US-A- 4 362 592
- US-A1- 2006 180 263

## Description

### BACKGROUND OF THE INVENTION

The invention relates to a method for building an unvulcanised tyre using tyre components of rubber, in which method a tyre building drum is used having a longitudinal axis and provided with two bead ring segments placed around the longitudinal axis and spaced apart from each other, wherein each bead ring segment is intended for supporting a bead ring core, with means for radially expanding a part of the tyre components placed between the ring segments, wherein the tyre building drum comprises a set of axially extending folding arms on each side outside of the bead ring segments, wherein each folding arm is provided with a first end oriented to the bead ring segment in question and provided with a roller element for directly contacting a tyre component, and wherein each folding arm at a second end facing away from the bead ring segment in question is connected via a swivel axle to a longitudinally slidable annular folding arm segment placed around the longitudinal axis, wherein the tyre building drum is furthermore provided with means for axially and radially moving each set of arms from a first position, in which the roller elements of the set of arms form an at least substantially closed ring, to a second position, for pressing a part of the tyre components placed outside of the bead ring segments against the expanded part of the tyre components placed within the bead ring segments.

Such a method is known from EP-B1-1.272.338. In the method described therein the roller elements of the sets of arms form an at least substantially closed ring, which when the folding arms move towards the bead ring segments fold the part of the tyre components situated outside of the bead ring segments, below also called the outer tyre components, over the bead ring core and press it against the bead ring core and against the part of the tyre components situated within the bead ring segments, below also called the inner tyre components. Although the known method functions adequately in general, the roller elements form undesirable imprints in the tyre when certain types of tyre components are used. Said imprints arise because the roller elements that are in direct contact with the tyre components exert too high a force on the tyre components. Particularly in case of tyres having a thickening in the outer tyre components, such as among others off-the-road tyres, there is a risk of said undesirable imprints arising.

### SUMMARY OF THE INVENTION

It is an object of the present invention to provide a method for building a tyre wherein despite the use of roller elements that contact the tyre components directly it is prevented that imprints arise in the tyre components.

According to the invention this object is achieved because the method as defined in claim 1, comprises the step of designing the tyre building drum such that the means for axially and radially moving each set of folding arms comprise a longitudinally slidable annular steering segment which is provided with a sloping steering surface which in axial direction of a bead ring segment in question slopes to the outside in the direction away from the longitudinal axis, wherein each folding arm is provided with a steering element situated between both ends of the folding arm which steering element can be made to abut the steering surface, and wherein the annular steering segment is provided with a stop for an annular folding arm segment, wherein the annular folding arm segment is situated between the annular steering segment in question and the bead ring segment in question, wherein in the first position of the folding arms the stop of the annular steering segment is situated spaced apart from the annular folding arm segment, and in that the method comprises the step of choosing the mutual distances such considered in axial direction between a bead ring segment, the first end and the steering element of a folding arm in question, that from the situation in which the folding arms are in the first position when moving the steering segment towards the bead ring segment, the steering surface will come to abut the steering element so that the roller element is moveable from the first position, after which at further movement of the steering segment towards the bead ring segment the roller element at the first end of the folding arm presses the part of the tyre components outside of the bead ring segments against a bead ring core to be placed on the bead ring segment while simultaneously the roller element moves away from the longitudinal axis, wherein the steering element moves along the steering surface until the stop of the annular steering segment comes to abut the annular folding arm segment, after which the folding arm swivels about the swivel axle and the steering element comes to lie apart from the steering surface. Due to the use of the steering element, that may be designed as a cam, a roller or another form of a cam follower that is known per se, the steering element provides as it were an extra rotation point for the folding arm. Said extra rotation point when engaged by the sloping steering surface becomes an extra point of application of forces, as a result of which, depending on the size of the slope of the steering surface, the axial force exerted by the roller element on the outer tyre components, also called side wall, is considerably reduced as a result of which the risk of imprints is strongly reduced and may even be completely absent. An additional advantage of said extra point of rotation, i.e. the steering element, is that it ensures that during the first part of folding the swivel axle is able to move freely, as a result of which the roller element is free to follow the contour of the outer tyre components, which is advantageous in case of outer tyre components provided with a thickening.

Please note that the use of an extra steering element and a steering surface is known per se from US-A-3.887.423. In the method described in said document, however, a tyre building drum is used having a so-called annular bladder which is arranged on the outer sides around the folding arms. The size of the slope and the mutual distance between the relevant elements, however, should be chosen such that the folding arm in the first part of folding tensions the bladder so that the bladder presses the outer tyre components against the bead ring core. In the first part of folding the roller elements therefore do not press the outer tyre components directly against the inner tyre components. By using such a bladder the creation of imprints is prevented. Not until the bead ring core has been passed during the folding arms moving to the inside, do the roller elements press the bladder against the central part of the inner tyre components. Indeed because it is the bladder and not the roller elements themselves, that press the outer tyre components against the bead ring core, the method described in US-A-3.887.423 may in some case not be optimal for folding and pressing the outer tyre components against the bead ring core. The techniques described in EP-B1-1.272.338 and US-A-3.887.423 therefore are totally different.

In an advantageous embodiment of a method according to the invention the method further comprises the step of designing the tyre building drum such that the roller element and the steering element of a folding arm in the first position of the folding arm are situated at least substantially at the same radial distance from the longitudinal axis. In this way a better and reproducible distribution of the forces exerted on the outer tyre components by the roller element can be realised. An even better distribution can be achieved when the method further comprises the step of designing the tyre building drum such that in the first position of the folding arm the swivel axle of the folding arm is situated at a shorter radial distance from the longitudinal axis than the roller element and the steering element are.

In a further advantageous embodiment of a method according to the invention the method comprises the step of choosing the size of the slope of the steering surface such that when moving the steering segment towards the bead ring segment a desired axial pressure on the tyre components is realised. The steeper the slope of the steering surface, the larger the axial component of the force exerted on the outer tyre components by the roller element. By choosing the size of the slope of the steering surface it is therefore possible to realise a specific pressure force for specific tyre components. It is also possible to use a steering surface having a varying slope angle size to realise a certain development of the pressure force.

The invention furthermore relates to a tyre building drum as defined in claim 6, the drum having a longitudinal axis and provided with two bead ring segments placed around the longitudinal axis and spaced apart from each other, wherein each bead ring segment is intended for supporting a bead ring core, with means for radially expanding a part of the tyre components placed between the ring segments, wherein the tyre building drum comprises a set of axially extending folding arms on each side outside of the bead ring segments, wherein each folding arm is provided with a first end oriented to the bead ring segment in question and provided with a roller element, and wherein each folding arm at a second end facing away from the bead ring segment in question is connected via a swivel axle to a longitudinally slidable annular folding arm segment placed around the longitudinal axis, wherein the tyre building drum is furthermore provided with means for axially and radially moving each set of arms from a first position, in which the roller elements of the set of arms form an at least substantially closed ring, to a second position, for pressing a part of the tyre components placed outside of the bead ring segments against the expanded part of the tyre components placed within the bead ring segments, wherein the means for axially and radially moving each set of arms comprise a longitudinally slidable annular steering segment provided with a sloping steering surface which in axial direction of a bead ring segment in question slopes to the outside in the direction away from the longitudinal axis, wherein each folding arm is provided with a steering element situated between both ends of the folding arm which steering element can be made to abut the steering surface, and wherein the annular steering segment is provided with a stop for an annular folding arm segment, wherein the annular folding arm segment is situated between the annular steering segment in question and the bead ring segment in question, wherein in the first position of the folding arms the stop of the annular steering segment is situated spaced apart from the annular folding arm segment, wherein the mutual distances considered in axial direction between a bead ring segment, the first end and the steering element of a folding arm in question have such a size that the method according to the invention can be carried out.

In an advantageous embodiment of a tyre building drum according to the invention the roller element and the steering element of a folding arm in the first position of the folding arm are situated at least substantially at the same radial distance from the longitudinal axis. In that case it is furthermore advantageous when in the first position of the folding arm the swivel axle of the folding arm is situated at a shorter radial distance from the longitudinal axis than the roller element and the steering element are.

Particular embodiments of the invention are defined in the dependent claims.

### SHORT DESCRIPTION OF THE DRAWING

The invention will be elucidated on the basis of a number of exemplary embodiments shown in the attached drawings, in which:
Figure 1 shows a schematic cross-section of a part of a tyre building drum for building an unvulcanised tyre wherein the folding arms are in the first, the inactive, position, and
Figure 2 shows a schematic cross-section of a part of a tyre building drum for building an unvulcanised tyre wherein the folding arms are in a position in which the outer tyre components are pressed against the bead ring core.

### DETAILED DESCRIPTION OF THE DRAWINGS

The invention among others relates to a method for building an unvulcanised tyre using tyre components of rubber, such as for instance known from EP-B1-1.272.338.

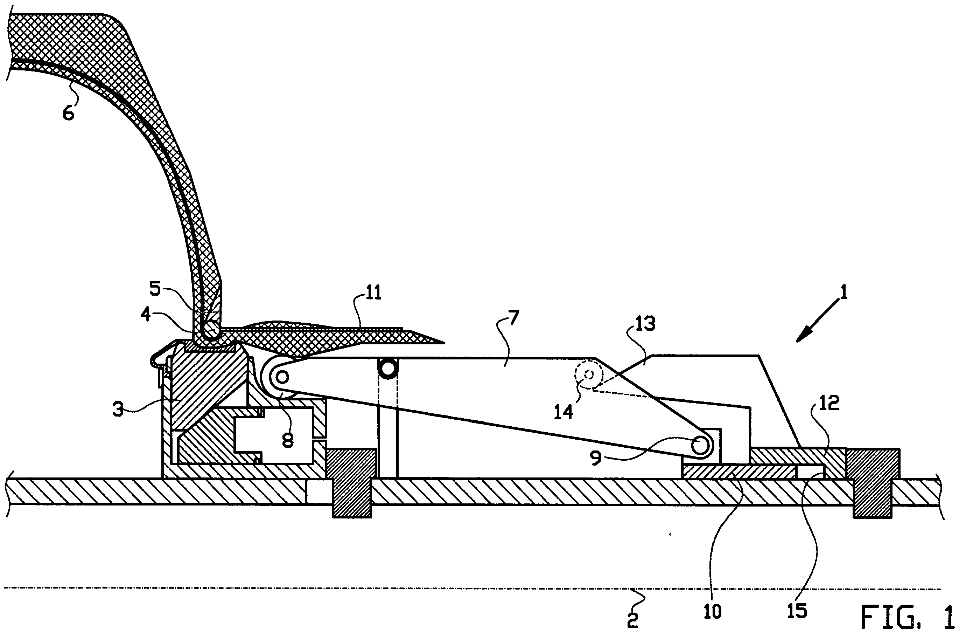

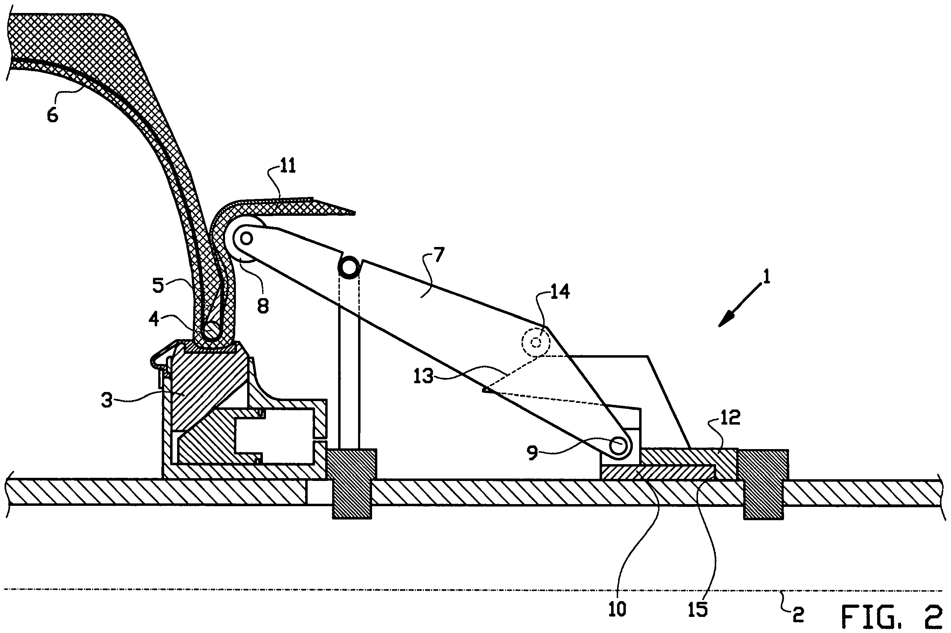

In the method a tyre building drum 1 is used of which in figures 1 and 2 only the upper right part is shown. The other parts, as known, are designed symmetrical with respect to said part.

The tyre building drum 1 has a longitudinal axis 2 and is provided with two bead ring segments 3 (of which one is shown in the figures), which are placed around the longitudinal axis 2 and are spaced apart from each other. Each bead ring segment 3 is intended for supporting a bead ring core 4 optionally provided with a filling strip 5.

The tyre building drum 1 further comprises means that are known per se and not shown in the figures, for radially expanding a part of the tyre components 6 placed between the bead ring segments 3.

On each side outside of the bead ring segments 3 the tyre building drum 1 comprises a set of axially extending folding arms 7 (of which one is shown in the figures). Each folding arm 7 is provided with a first end oriented towards the bead ring segment 3 in question and provided with a roller element 8 able to directly contact a tyre component. Each folding arm 7 furthermore at a second end facing away from the bead ring segment 3 in question has a swivel axle 9 with which said folding arm 7 is connected to a longitudinally slidable annular folding arm segment 10 placed around the longitudinal axis 2.

The tyre building drum 1 is furthermore provided with means for axially and radially moving each set of arms 7 from a first (inactive) position (shown in figure 1) in which the roller elements 8 of the set of arms 7 form an at least substantially closed ring, to a second position (shown in figure 2) for pressing a part 11 of the tyre components placed outside of the bead ring segments 3 against the expanded part 6 of the tyre components placed within the bead ring segments 3. In the embodiment shown the outer part 11 of the tyre components contains a thickening, such as for instance used in tyres intended for off-the-road use. The movement of the arms towards the bead ring segments may for instance, and as known per se, be realised by for instance pneumatic drives or comparable drives.

The tyre building drum 1 is and has furthermore been designed such that the means for axially and radially moving each set of folding arms 7 comprises a longitudinally slidable annular steering segment 12 that is provided with sloping steering surface 13 which in axial direction of a bead ring segment 3 in question slopes to the outside in the direction away from the longitudinal axis 2. Moreover each folding arm 7 is provided with a steering element 14 situated between both ends of the folding arm 7, which steering element can be made to abut the steering surface 13. Due to the use of the steering element 14, that may be designed as a cam, a roller or another form of a cam follower that is known per se, the steering element 14 provides as it were an extra rotation point for the folding arm 7. Said extra rotation point when engaged by the sloping steering surface 14 becomes an extra point of application of forces, as a result of which, depending on the size of the slope of the steering surface 14, the axial force exerted by the roller element 8 on the outer tyre components 11, also called side wall, is considerably reduced as a result of which the risk of undesired imprints on the tyre components is strongly reduced and may even be completely absent. An additional advantage of said extra point of rotation, i.e. the steering element 14, is that it ensures that during the first part of folding the swivel axle 9 is able to move freely, as a result of which the roller element 8 is free to follow the contour of the outer tyre components 11, which is advantageous in case of outer tyre components provided with a thickening.

The annular steering segment 12 is furthermore provided with a stop 15 (a stop surface in the embodiment shown) for an annular folding arm segment 10. The annular folding arm segment 10 is in this case situated between the annular steering segment 12 in question (its stop surface 15) and the bead ring segment 3 in question.

In the first position of the folding arms 7 (as shown in figure 1) the stop 15 of the annular steering segment 12 is spaced apart from the annular folding arm segment 10. The mutual distances considered in axial direction between a bead ring segment 3, the first end (8) and the steering element 14 of a folding arm 7 in question are chosen such that from the situation in which the folding arms 7 are in the first position (as shown in figure 1) at movement of the steering segment 12 towards the bead ring segment 3, the steering surface 13 will come to abut the steering element 14 so that the roller element 8 is moved from the first position. At further movement of the steering segment 12 towards the bead ring segment 3 the roller element 8 at the first end of the folding arm 7 presses the part 11 of the tyre components outside of the bead ring segments 3 against a bead ring core 4, 5 placed on the bead ring segment 3, while simultaneously moving the roller element 8 away from the longitudinal axis 2. Here the steering element 14 moves along the steering surface 13 until the abutment 15 of the annular steering segment 12 comes to abut the annular folding arm segment 10, after which the folding arm 7 swivels about the swivel axle 9 and the steering element 14 comes to lie apart from the steering surface 13. In figure 2 the situation is shown in which the steering element 14 just about contacts the steering surface 13. In this way the outer part 11 of the tyre components is pressed against the bead ring core 4, 5 by the roller element 8 from the start.

As indicated by the force arrows in figure 1, the size of the slope of the steering surface 13 defines the size of the axial force exerted on the tyre components by the roller element 8 when the steering segment 12 moves to the bead ring segment 3. By choosing the size of the slope of the steering surface 13, the size of said axial force can therefore be adjusted to a desired axial pressure.

In the embodiment shown the roller element 8 and the steering element 13 of a folding arm 7 in the first position (shown in figure 1) of the folding arm 7, are situated at at least substantially the same radial distance from the longitudinal axis 2. As a result a proper, reproducible distribution of the force exerted on the tyre components by the roller element 8, is achieved. It is furthermore advantageous that in said first position of the folding arm the swivel axle 9 of the folding arm 7 is situated at a shorter radial distance from the longitudinal axis 2 than the roller element 8 and the steering element 13 are.

The above description is included to illustrate the operation of preferred embodiments of the invention and not to limit the scope of the invention. Starting from the above explanation many variations that fall within the scope of the present invention, as defined in the attached claims, will be evident to an expert.

## Claims

1. Method for building an unvulcanised tyre using tyre components of rubber, in which method a tyre building drum (1) is used having a longitudinal axis (2) and provided with two bead ring segments (3) places around the longitudinal axis (2) and spaced apart from each other, wherein each bead ring segment (3) is intended for supporting a bead ring core (4), with means for radially expanding a part of the tyre components (6) placed between the ring segments, (3) wherein the tyre building drum (1) comprises a set of axially extending folding arms (7) on each side outside of the bead ring segments, (3) wherein each folding arm (7) is provided with a first end oriented to the bead ring segment in question and provided with a roller element (8) for directly contacting a tyre component, and wherein each folding arm (7) at a second end facing away from the bead ring segment (3) in question is connected via a swivel axle (9) to a longitudinally slidable annular folding arm segment (10) placed around the longitudinal axis, wherein the tyre building drum is furthermore provided with means for axially and radially moving each set of arm (7) from a first position, in which the roller elements (8) of the set of arms (7) form an at least substantially closed ring, to a second position, for pressing a part (11) of the tyre components placed outside of the bead ring segments (3) against the expanded part (6) of the tyre components placed within the bead ring segments (3), **characterised in that** the method comprises the step of designing the tyre building drum such that the means for axially and radially moving each set of folding arms (7) comprise a longitudinally slidable annular steering segment (12) wnich is provided with a sloping steering surface (13) which in axial direction of a bead ring segment (5) in question slopes to the outside in the direction away from the longitudinal axis (2), wherein each folding arm (7) provided with a steering element (14) situated between both ends of the folding arm (7) which steering element (14) can be made to abut the steering surface (13), and wherein the annular steering segment (12) is provided with a stop (15) for an annular folding arm segment (10), wherein the annular folding arm segment (10) is situated between the annular steering segment (12) in question and the bead ring segment (3) in question, wherein in the first position of the folding arms (7) the stop (15) of the annular steering segment (14) is situated spaced apart from the annular folding arm segment (10), and **in that** the method comprises the step of choosing the mutual distances such considered in axial direction between a bead ring segment (3), the first end and the steering element (14) of a folding arm (7) in question, that from the situation in which the folding arms (7) are in the first position when moving the steering segment (12) towards the bead ring segment (5), the steering surface (13) will come to abut the steering element (14) so that the roller element (8) is moved from the first position, after which at further movement of the steering segment (12) towards the bead ring segment (3) the roller element (8) at the first end of the folding arm (7) presses the part (11) of the tyre components outside of the bead ring segments (3) against a bead ring core (4,5) to be placed on the bead ring segment (3) while simultaneously the roller element (8) moves away from the longitudinal axis (2), wherein the steering element (14) moves along the steering surface (13) until the stop (15) of the annular steering segment (12) comes to abut the annular folding arm segment (10), after which the folding arm (7) swivels about the swivel axle (9) and the steering element (14) comes to lie apart from the steering surface (13).

2. Method according to claim 1, **characterised in that** the method further comprises the step of designing the tyre building drum such that the roller element (8) and the steering element (12) or a folding arm (7) the first position of the folding arm (7) are situated at least substantially at the same radial distance from the longitudinal axis (2).

3. Method according to claim 2, **characterised in that** the method further comprises the step of designing the tyre building drum such that in the first position of the folding arm (7) the swivel axle (9) of the folding arm (7) is situated at a shorter radial distance from the longitudinal axis (2) than the roller element (8) and the steering element (14) are.

4. Method according to any one of the preceding claims, **characterised in that** the method comprises the step of choosing the size of the slope of the steering surface (13) such that when moving the steering segment (12) towards the bead ring segment (3) a desired axial pressure on the tyre components is realised.

5. Method according to any one of the preceding claims, wherein during the first part of folding, the swivel axle (9) is able to move freely.

6. Tyre building drum(1) having a longitudinal axis (2) and provided with two bead ring segments (3) placed around the longitudinal axis (2) and spaced apart from each other, wherein each bead ring segment (3) intended for supporting a bead ring core (4), with means for radially expanding a part of the tyre components (6) placed between the ring segments (3), herein the tyre building drum comprises a set of axially extending folding arms (7) on each side outside of the bead ring segments (5), wherein each folding arm (7) is provided with a first end oriented to the bead ring segment in question and provided with a roller element (8) for directly contacting a tyre component, and wherein each folding arm (7) at a second end facing away from the bead ring segment (3) in question is connected via a swivel axle (9) to a longitudinally slidable annular folding arm segment (10) placed around the longitudinal axis, wherein the tyre building drum is furthermore provided with means for axially and radially moving each set of arms (7) from a first position, in which the roller elements (8) of the set of arms (7) form an at least substantially closed ring, to a second position, for pressing a part (11) of the tyre components placed outside of the bead ring segments (3) against the expanded part (6) of the tyre components placed within the bead ring segments (3) wherein the means for axially and radially moving each set of arms (7) comprise a longitudinally slidable annular steering segment (12) provided with a sloping steering surface (13) which in axial direction of a bead ring segment (3) in question slopes to the outside in the direction away from the longitudinale axis (2), wherein each folding arm (7) is provided with a steering element (14) situated between both ends of the folding arm (7) which steering element (14) can be made to abut the steering surface, (13) and wherein the annular steering segment (12) is provided with a stop (15) for an annular folding arm segment (10), wherein the annular folding arm segment (10) is situated between the annular steering segment (12) in question and the bead ring segment (3) in question, wherein in the first position of the folding arms (7) the stop (15) of the annular steering segment (14) is situated spaced apart from the annular folding arm segment (10), wherein the mutual distances considered in axial direction between a bead ring segment (3), the first end and the steering element (14) of a folding arm (7) in question have such a size that when moving the steering segment (12) towards the bead ring segment (3), the steering surface (13) will come to abut the steering element (14) so that the roller element (8) is moveable from the first position, after which at further movement of the steering segment (12) towards the bead ring segment (3) the roller element (8) at the first end of the folding arm (7) presses the part (11) of the tyre components outside of the bead ring segments (3) against a bead ring core (4,5) to be placed on the bead ring segment (3) while simultaneously the roller element (8) moves away from the longitudinal axis (2), wherein the steering element (14) is movable along the steering surface (13) until the stop (15) of the annular steering segment (12) comes to abut the annular folding arm segment (10), after which the folding arm (7) swivels about the swivel axle (9) and the steering element (14) comes to lie apart from the steering surface (13).

7. Tyre building drum according to claim 6, **characterised in that** the roller element (8) and the steering element (12) of a folding arm (7) in the first position of the folding arm (7) are situated at least substantially at the same radial distance from the longitudinal axis (2).

8. Tyre building drum according to claim 7, **characterised in that** in the
first position of the folding arm (7) the swivel axle (9) of the folding arm (7) is situated at a shorter radial distance from the longitudinal axis (2) than the roller element (8) and the steering element (14) are.

9. Tyre building drum according to any one of the claims 6-8, wherein during the first part of folding, the swivel axle (9) is able to move freely.

## Patentansprüche

1. Verfahren zum Aufbau eines unvulkanisierten Reifens unter Verwendung von Reifenkomponenten aus Gummi, wobei bei dem Verfahren eine Reifenaufbautrommel (1) verwendet wird, die eine Längsachse (2) aufweist und mit zwei Wulstring-Segmenten (3) versehen ist, die um die longitudinale Achse (2) herum positioniert und voneinander beanstandet sind, wobei jedes Wulstring-Segment (3) dazu bestimmt ist, einen Wulstring-Kern (4) zu lagern, mit Mitteln, um einen zwischen den Ring-Segmenten (3) positionierten Teil der Reifenkomponenten (6) radial aufzuweiten, wobei die Reifenaufbautrommel (1) einen Satz von sich axial erstreckenden Falt-Armen (7) auf jeder Seite außerhalb von den Wulstring-Segmenten (3) aufweist, wobei jeder Falt-Arm (7) mit einem ersten Ende versehen ist, welches zu dem betreffenden Wulstring-Segment hin orientiert ist, und mit einem Rollerelement (8) versehen ist, um eine Reifenkomponente direkt zu kontaktieren, und wobei jeder Falt-Arm (7) an einem zweiten Ende, welches von dem betreffenden Wulstring-Segment (3) weg weist, vermittels einer Schwenkachse (9) mit einem longitudinal verschiebbaren, ringförmigen Falt-Arm-Segment (10) verbunden ist, welches um die Längsachse herum positioniert ist, wobei die Reifenaufbautrommel weiterhin mit Mitteln versehen ist, um jeden Satz von Armen (7) axial und radial von einer ersten Position, in welcher die Rollerelemente (8) von dem Satz von Armen (7) einen im Wesentlichen geschlossen Ring bilden, zu einer zweiten Position zu bewegen, um einen außerhalb der Wulstring-Segmente (3) positionierten Teil (11) der Reifenkomponenten gegen den innerhalb der Wulstring-Segmente (3) positionierten aufgeweiteten Teil (6) der Reifenkomponenten zu drücken, **dadurch gekennzeichnet, dass** das Verfahren den Schritt umfasst, die Reifenaufbautrommel so auszulegen, dass die Mittel, um jeden Satz von Falt-Armen (7) axial und radial zu bewegen, ein longitudinal verschiebbares, ringförmiges Steuersegment (12) umfassen, das mit einer geneigten Steuerfläche (13) versehen ist, welches in axialer Richtung von einem betreffenden Wulstring-Segment (3) nach außen in die Richtung weg von der Längsachse (2) geneigt ist, wobei jeder Falt-Arm (7) mit einem Steuerelement (14) versehen ist, welches sich zwischen beiden Enden des Falt-Arms (7) befindet, wobei das Steuerelement (14) zur Anlage an die Steuerfläche (13) gebracht werden kann, und wobei das ringförmige Steuersegment (12) mit einem Stopper (15) für ein ringförmiges Falt-Arm-Segment (10) versehen ist, wobei das ringförmiges Falt-Arm-Segment (10) sich zwischen dem betreffenden ringförmigen Steuersegment (12) und dem betreffenden Wulstring-Segment (3) befindet, wobei in der ersten Position der Falt-Arme (7) der Stopper (15) des ringförmigen Steuersegments (14) von dem ringförmigen Falt-Arm-Segment (10) beabstandet angeordnet ist, und dass das Verfahren den Schritt umfasst, die so betrachteten gegenseitigen Abstände in axialer Richtung zwischen einem Wulstring-Segment (3), dem ersten Ende und dem Steuerelement (14) eines betreffenden Falt-Arms (7) so auszuwählen, dass aus der Situation heraus, in welcher die Falt-Arme (7) sich in der ersten Position befinden, wenn das Steuersegment (12) zu dem Wulstring-Segment (3) hin bewegt wird, die Steuerfläche (13) zur Anlage an das Steuerelement (14) gelangen wird, so dass das Rollerelement (8) von der ersten Position weg bewegt wird, wonach bei einer weiteren Bewegung des Steuersegments (12) zu dem Wulstring-Segment (3) hin das Rollerelement (8) an dem ersten Ende des Falt-Arms (7) den Teil (11) der Reifenkomponenten außerhalb von den Wulstring-Segmenten (3) gegen einen Wulstring-Kern (4, 5) drückt, der an dem Wulstring-Segment (3) zu positionieren ist, während das Rollerelement (8) sich gleichzeitig weg von der Längsachse (2) bewegt, wobei das Steuerelement (14) sich längs der Steuerfläche (13) bewegt, bis der Stopper (15) des ringförmigen Steuersegments (12) zur Anlage an das ringförmige Falt-Arm-Segment (10) gelangt, wonach der Falt-Arm (7) um die Schwenkachse (9) schwenkt und das Steuerelement (14) von der Steuerfläche (13) getrennt zu liegen kommt.

2. Verfahren nach Anspruch 1, **dadurch gekennzeichnet, dass** das Verfahren weiter den Schritt umfasst, die Reifenaufbautrommel so auszulegen, dass das Rollerelement (8) und das Steuerelement (12) eines Falt-Arms (7) in der ersten Position des Falt-Arms (7) wenigstens im Wesentlichen im gleichen radialen Abstand von der Längsachse (2) positioniert sind.

3. Verfahren nach Anspruch 2, **dadurch gekennzeichnet, dass** das Verfahren weiter den Schritt umfasst, die Reifenaufbautrommel so auszulegen, dass in der ersten Position des Falt-Arms (7) die Schwenkachse (9) des Falt-Arms (7) sich in einem kürzeren radialen Abstand von der Längsachse (2) befindet als das Rollerelement (8) und das Steuerelement (14).

4. Verfahren nach einem der vorhergehenden Ansprüche, **dadurch gekennzeichnet, dass** das Verfahren den Schritt umfasst, die Größe der Neigung der Steuerfläche (13) so auszuwählen, dass dann, wenn das Steuersegment (12) sich zu dem Wulstring-Segment (3) hin bewegt, ein gewünschter axialer Druck auf die Reifenkomponenten ausgeübt wird.

5. Verfahren nach einem der vorhergehenden Ansprüche, wobei während des ersten Teils des Faltens die Schwenkachse (9) in der Lage ist, sich frei zu bewegten.

6. Reifenaufbautrommel (1), die eine Längsachse (2) aufweist und mit zwei Wulstring-Segmenten (3) versehen ist, die um die Längsachse (2) herum angeordnet und voneinander beanstandet sind, wobei jedes Wulstring-Segment (3) dazu bestimmt ist, einen Wulstring-Kern (4) zu lagern, mit Mitteln zum radialen Aufweiten von einem Teil der Reifenkomponenten (6), der zwischen den Ring-Segmenten (3) positioniert ist, wobei die Reifenaufbautrommel einen Satz von sich axial erstreckenden Falt-Armen (7) auf jeder Seite außerhalb der Wulstring-Segmente (3) umfasst, wobei jeder Falt-Arm (7) mit einem ersten Ende versehen ist, das zu dem betreffenden Wulstring-Segment hin orientiert ist und mit einem Rollerelement (8) versehen ist, um eine Reifenkomponente direkt zu kontaktieren, und wobei jeder Falt-Arm (7) an einem zweiten Ende, welches von dem betreffenden Wulstring-Segment (3) weg weist, vermittels einer Schwenkachse (9) mit einem longitudinal verschiebbaren ringförmigen Falt-Arm-Segment (10) verbunden ist, das um die Längsachse herum positioniert ist, wobei die Reifenaufbautrommel weiterhin mit Mitteln versehen ist, um jeden Satz von Armen (7) axial und radial von einer ersten Position, in welcher die Rollerelemente (8) von dem Satz von Armen (7) einen im Wesentlichen geschlossen Ring bilden, zu einer zweiten Position zu bewegen, um einen Teil (11) der Reifenkomponenten, der außerhalb der Wulstring-Segmente (3) positioniert ist, gegen den aufgeweiteten Teil (6) der Reifenkomponenten zu drücken, der innerhalb der Wulstring-Segmente (3) positioniert ist, wobei die Mittel zum axialen und radialen Bewegen von jedem Satz von Armen (7) ein longitudinal verschiebbares, ringförmiges Steuersegment (12) umfassen, das mit einer geneigten Steuerfläche (13) versehen ist, welches in axialer Richtung eines betreffenden Wulstring-Segments (3) nach außen in die Richtung weg von der Längsachse (2) geneigt ist, wobei jeder Falt-Arm (7) mit einem Steuerelement (14) versehen ist, das sich zwischen beiden Enden des Falt-Arms (7) befindet, wobei das Steuerelement (14) zur Anlage an die Steuerfläche (13) gebracht werden kann, und wobei das ringförmige Steuersegment (12) mit einem Stopper (15) für ein ringförmiges Falt-Arm-Segment (10) versehen ist, wobei das ringförmige Falt-Arm-Segment (10) sich zwischen dem betreffenden ringförmigen Steuersegment (12) und dem betreffenden Wulstring-Segment (3) befindet, wobei in der ersten Position der Falt-Arme (7) der Stopper (15) des ringförmigen Steuersegments (14) sich von dem ringförmigen Falt-Arm-Segment (10) beabstandet befindet, wobei die gegenseitigen Abstände, betrachtet in axialer Richtung, zwischen einem Wulstring-Segment (3), dem ersten Ende und dem Steuerelement (14) von einem betreffenden Falt-Arm (7) solch eine Größe haben, dass dann, wenn das Steuersegment (12) zu dem Wulstring-Segment (3) hin bewegt wird, die Steuerfläche (13) zur Anlage an das Steuerelement (14) gelangen wird, so dass das Rollerelement (8) von der ersten Position weg bewegbar ist, wonach bei einer weiteren Bewegung des Steuersegments (12) zu dem Wulstring-Segment (3) hin das Rollerelement (8) an dem ersten Ende des Falt-Arms (7) den Teil (11) der Reifenkomponenten außerhalb der Wulstring-Segmente (3) gegen einen Wulstring-Kern (4, 5) drückt, der an dem Wulstring-Segment (3) zu positionieren ist, während sich das Rollerelement (8) gleichzeitig von der Längsachse (2) weg bewegt, wobei das Steuerelement (14) längs der Steuerfläche (13) bewegbar ist, bis der Stopper (15) des ringförmigen Steuersegments (12) zur Anlage an das ringförmige Falt-Arm-Segment (10) gelangt, wonach der Falt-Arm (7) um die Schwenkachse (9) schwenkt und das Steuerelement (14) von der Steuerfläche (13) getrennt zu liegen kommt.

7. Reifenaufbautrommel nach Anspruch 6, **dadurch gekennzeichnet, dass** das Rollerelement (8) und das Steuerelement (12) eines Falt-Arms (7) sich in der ersten Position des Falt-Arms (7) im Wesentlichen im gleichen radialen Abstand von der Längsachse (2) befinden.

8. Reifenaufbautrommel nach Anspruch 7, **dadurch gekennzeichnet, dass** in der ersten Position des Falt-Arms (7) sich die Schwenkachse (9) des Falt-Arms (7) in einem kürzeren radialen Abstand von der Längsachse (2) befindet als das Rollerelement (8) und das Steuerelement (14).

9. Reifenaufbautrommel nach einem der Ansprüche 6 bis 8, wobei während des ersten Teils des Faltens die Schwenkachse (9) in der Lage ist, sich frei zu bewegten.

## Revendications

1. Méthode de fabrication d'un pneu non vulcanisé utilisant des composants de pneu de caoutchouc, dans laquelle un tambour de fabrication de pneu (1) est utilisé, ayant un axe longitudinal (2) et équipé de deux segments d'anneaux de talon (3) placés autour de l'axe longitudinal (2) et écartés l'un de l'autre, où chaque segment d'anneau de talon (3) est destiné à soutenir un noyau d'anneau de talon (4), avec un moyen d'étirer radialement une partie des composants du pneu (6) placés entre les segments d'anneaux (3), où le tambour de construction du pneu (1) comprend un jeu de bras pliants s'étendant axialement de chaque côté à l'extérieur des segments d'anneaux de talon (3), où chaque bras pliant (7) est pourvu d'une première extrémité orientée vers le segment d'anneau de talon en question et équipée d'un élément de rouleau de roue libre (8) pour le contact direct avec un composant du pneu, et où chaque bras pliant (7) au niveau d'une deuxième extrémité à l'opposé du segment d'anneau de talon (3) en question est connecté via un essieu pivotant (9) à un segment annulaire du bras pliant coulissant longitudinalement (10) placé autour de l'axe longitudinal, où le tambour de construction du pneu est en outre équipé de moyen de déplacer axialement et radialement chaque jeu de bras (7) entre une première position, dans laquelle les éléments de rouleau de roue libre (8) du jeu de bras (7) forment un anneau au moins essentiellement clos et une deuxième position pour presser une partie (11) des composants du pneu placés à l'extérieur des segments d'anneau de talon (3) contre la partie allongée (6) des composants du pneu placés à l'intérieur des segments d'anneaux de talon (3), **caractérisée en ce que** la méthode comprend l'étape de concevoir le tambour de fabrication du pneu de façon à ce que le moyen de déplacer axialement et radialement chaque jeu de bras pliants (7) comprend un segment annulaire de direction coulissant longitudinalement (12) qui est équipé d'une surface de direction inclinée (13) qui penche dans la direction axiale d'un segment d'anneau de talon (3) en question vers l'extérieur dans la direction s'écartant de l'axe longitudinal (2), où chaque bras pliant (7) est équipé d'un élément de direction (14) situé entre les deux extrémités du bras pliant (7) dont l'élément de direction (14) peut être mis en butée contre la surface de direction (13), et où le segment annulaire de direction (12) est équipé d'un arrêt (15) pour un segment annulaire du bras pliant (10), où le segment annulaire du bras pliant (10) est situé entre le segment annulaire de direction (12) en question et le segment d'anneau de talon (3) en question, où dans la première position des bras pliants (7) l'arrêt (15) du segment annulaire de direction (14) est situé à l'écart du segment annulaire du bras pliant (10), et **en ce que** la méthode comprend l'étape de choisir les distances mutuelles considérées selon la direction axiale entre un segment d'anneau de talon (3), la première extrémité et l'élément de direction (14) d'un bras pliant en question, qui à partir de la situation dans laquelle les bras pliants (7) sont dans la première position quand le segment de direction (12) se déplace vers le segment d'anneau de talon (3), la surface de direction (13) viendra buter ainsi contre l'élément de direction (14) de façon à ce que l'élément de rouleau de roue libre (8) soit déplacé de la première position, après quoi un mouvement supplémentaire du segment de direction (12) vers le segment d'anneau de talon (3) l'élément de rouleau de roue libre (8) au niveau de la première extrémité du bras pliant (7) presse la partie (11) des composants du pneu à l'extérieur des segments d'anneau de talon (3) contre un noyau d'anneau de talon (4, 5) à placer sur les segments d'anneau de talon (3) tout en éloignant simultanément l'élément de rouleau de roue libre (8) de l'axe longitudinal (2), où l'élément de direction (14) se déplace le long de la surface de direction (13) jusqu'à ce que l'arrêt (15) du segment annulaire de direction (12) vienne buter contre le segment annulaire du bras pliant (10), après quoi le bras pliant (7) pivote autour de l'essieu pivotant (9) et l'élément de direction (14) vient reposer à l'écart de la surface de direction (13).

2. Méthode selon la revendication 1, **caractérisée en ce que** la méthode comprend en outre l'étape de concevoir le tambour de construction du pneu de façon à ce que l'élément de rouleau de roue libre (8) et l'élément de direction (12) d'un bras pliant (7) dans la première position du bras pliant (7) soient situé au moins essentiellement à la même distance radiale de l'axe longitudinal (2).

3. Méthode selon la revendication 2, **caractérisée en ce que** la méthode comprend en outre l'étape de concevoir le tambour de construction du pneu de façon à ce que dans la première position du bras pliant (7) l'essieu pivotant (9) du bras pliant (7) soit situé à une distance radiale de l'axe longitudinal (2) plus courte que ne le sont l'élément roulant (8) et l'élément de direction (14).

4. Méthode selon l'une quelconque des revendications précédentes, **caractérisée en ce que** la méthode comprend l'étape de choisir la taille de la pente de la surface de direction (13) de façon à ce que quand l'élément de direction est déplacé (12) vers le segment d'anneau de talon (3) une pression axiale désirée soit réalisée sur les composants du pneu.

5. Méthode selon l'une quelconque des revendications précédentes, **caractérisée en ce que** pendant la première partie du pliage, l'essieu pivotant (9) peut se déplacer librement.

6. Tambour de construction de pneu (1) ayant un axe longitudinal (2) et équipé de deux segments d'anneau de talon (3) placés autour de l'axe longitudinal (2) et écartés l'un de l'autre, où chaque segment d'anneau de talon (3) est destiné à supporter un noyau d'anneau de talon (4), avec un moyen d'étirer radialement une partie des composants du pneu (6) placée entre les segments d' anneau (3), où le tambour de construction du pneu comprend un jeu de bras pliants (7) s'étendant axialement de chaque côté à l'extérieur des segments d'anneaux de talon (3), où chaque bras pliant (7) est pourvu d'une première extrémité orientée vers le segment d'anneau de talon en question et équipée d'un élément de rouleau de roue libre (8) pour le contact direct avec un composant du pneu, et en ce que chaque bras pliant (7) au niveau de la deuxième extrémité à l'écart du segment de l'anneau de talon (3) en question est connecté via un essieu pivotant (9) à un segment annulaire du bras pliant coulissant longitudinalement (10) placé autour de l'axe longitudinal, où le tambour de construction du pneu est en outre équipé d'un moyen de déplacer axialement et radialement chaque jeu de bras (7) d'une première position, dans laquelle les éléments de rouleau de roue libre (8) du jeu de bras (7) forment un anneau au moins essentiellement clos, vers une deuxième position, pour presser une partie (11) des composants du pneu placés à l'extérieur des segments d'anneau de talon (3) contre la partie allongée (6) des composants de pneu placés à l'intérieur des segments d'anneau de talon (3), où le moyen de déplacer axialement et radialement chaque jeu de bras (7) comprend un segment annulaire de direction coulissant longitudinalement (12) équipé d'une surface inclinée de direction (13) qui dans la direction axiale d'un segment d'anneau de talon (3) en question penche vers l'extérieur dans la direction s'écartant de l'axe longitudinal (2), où chaque bras pliant (7) est pourvu d'un élément de direction (14) situé entre les deux extrémités du bras pliant (7) dont l'élément de direction peut être mis en butée contre la surface de direction (13), et où le segment annulaire de direction (12) est équipé d'un arrêt (15) pour un segment annulaire de bras pliant (10), où le segment annulaire du bras pliant (10) est situé entre le segment annulaire de direction (12) en question et le segment d'anneau de talon (3) en question, où dans la première position des bras pliants (7) l'arrêt (15) du segment annulaire de direction (14) est situé à l'écart du segment annulaire du bras pliant (10), où les distances mutuelles considérées selon la direction axiale entre un segment d'anneau de talon (3), la première extrémité et l'élément de direction (14) d'un bras pliant (7) en question ont une taille telle que quand le segment de direction (12) se déplace vers le segment d'anneau de talon (3), la surface de direction (13) viendra buter contre l'élément de direction (14) de façon à ce que l'élément de rouleau de roue libre (8) peut quitter la première position, après quoi à la suite d'un mouvement supplémentaire du segment de direction (12) vers le segment d' anneau de talon (3) l'élément de rouleau de roue libre (8) au niveau de la première extrémité du bras pliant (7) presse la partie (11) des composants du pneu à l'extérieur des segments d'anneau de talon (3) contre un noyau d'anneau de talon (4, 5) devant être placé sur le segment d'anneau de talon (3) tout en éloignant simultanément l'élément de rouleau de roue libre (8) de l'axe longitudinal (2), où l'élément de direction (14) est mobile le long de la surface de direction (13) jusqu'à ce que l'arrêt (15) du segment annulaire de direction (12) vienne buter contre le segment annulaire du bras pliant (10), après quoi le bras pliant (7) pivote autour de l'essieu pivotant (9) et l'élément de direction (14) vient reposer à l'écart de la surface de direction (13).

7. Tambour de construction de pneu selon la revendication 6, **caractérisé en ce que** l'élément de rouleau de roue libre (8) et l'élément de direction (12) d'un bras pliant (7) dans la première position du bras pliant (7) sont situés au moins essentiellement à la même distance radiale de l'axe longitudinale (2).

8. Tambour de construction de pneu selon la revendication 7, **caractérisé en ce que** dans la première position du bras pliant (7) l'essieu pivotant (9) du bras pliant (7) est situé à une distance radiale de l'axe longitudinal (2) plus courte que ne le sont l'élément de rouleau de roue libre (8) et l'élément de direction (14).

9. Tambour de construction de pneu selon l'une quelconque des revendications 6 à 8, **caractérisé en ce que** pendant la première partie du pliage, l'essieu pivotant (9) peut bouger librement.
